# FASCICULE DE BREVET EUROPEEN

(11) **EP 3 729 203 B1**
(45) Date de publication et mention de la délivrance du brevet: **30.09.2026**
(21) Numéro de dépôt: 18811290.8
(22) Date de dépôt: 06.12.2018
(51) Int. Cl.: G04B 19/12, G04B 45/00, B33Y 80/00, B29C 64/112

(54) **PROCÉDÉ DE RÉALISATION D'UN ÉLÉMENT TRIDIMENSIONNEL SUR UN COMPOSANT HORLOGER**
VERFAHREN ZUR ERSTELLUNG EINES 3D-ELEMENTS AUF EINER UHRKOMPONENTE
METHOD FOR PRODUCING A THREE-DIMENSIONAL ELEMENT ON A TIMEPIECE COMPONENT

(30) Priorité: 20.12.2017 EP 17209106
(43) Date de publication de la demande: 28.10.2020
(73) Titulaire: ETA SA Manufacture Horlogère Suisse, 2540 Grenchen (CH)
(72) Inventeur: RAILLARD, Brice, 2502 Bienne (CH); MIHAILOVIC, Vlada, 2544 Bettlach (CH); JÄGGI, Félix, 2504 Bienne (CH); EMMENEGGER, Christophe, 1730 Ecuvillens (CH); JEAN-RENAUD, Frédéric, 2300 La Chaux-de-Fonds (CH)
(74) Mandataire: ICB SA
(86) Numéro de dépôt international: PCT/EP2018/083718
(87) Numéro de publication internationale: WO 2019/121028

(56) Documents cités:
- EP-A1- 3 002 107
- WO-A1-2016/116748
- SCULPTEO: "Techniques et technologies pour impression 3D et imprimantes3D", 11 July 2017 (2017-07-11), pages 1 - 8, XP055480603, Retrieved from the Internet <URL:https://www.sculpteo.com/fr/impression-3d/technologies-dimpression-3d/> [retrieved on 20180601]

## Description

### Domaine technique

La présente invention concerne un procédé de réalisation d'un élément tridimensionnel sur un composant horloger et un système mettant en œuvre un tel procédé.

L'invention concerne également un composant horloger comprenant un tel élément tridimensionnel ainsi qu'une pièce d'horlogerie pourvue de ce composant.

La présente invention porte aussi sur un programme d'ordinateur.

### Art antérieur

Les composant horloger tels que des cadrans de pièces d'horlogerie sont en général plans avec comme seuls éléments tridimensionnels des appliques telles que les chiffres des heures ainsi que des indexes disposés à intervalles réguliers autour de la périphérie de ces cadrans afin de faciliter la lecture de l'heure par rapport à la position angulaire des aiguilles. La réalisation d'appliques et d'indexes reste un procédé complexe et leur pose sur un cadran une opération fastidieuse.

Il existe néanmoins différents procédés de réalisation d'éléments tridimensionnels sur des cadrans qui ont l'avantage de paliers les inconvénients susmentionnés.

En effet, on connaît dans le document EP2370865, une solution qui consiste à réaliser un masque sur un cadran d'une pièce d'horlogerie d'une épaisseur correspondant à l'épaisseur souhaitée des éléments tridimensionnels destinés à décorer ce cadran, et présentant au moins une ouverture. Ce masque est ensuite placé contre le cadran avec l'ouverture disposée à l'endroit de la partie du cadran à décorer afin de remplir par formage à chaud l'ouverture du masque avec un matériau au moins partiellement amorphe. Enfin le masque est retiré afin d'obtenir l'élément tridimensionnel sur le cadran de cette pièce d'horlogerie.

Toutefois, une telle solution est relativement complexe à réaliser du fait du nombre important d'opérations nécessaires à sa mise en œuvre et des différents types d'outillage qu'elle requiert.

### Résumé de l'invention

Un but de la présente invention est par conséquent de proposer un procédé qui permet la réalisation d'un élément tridimensionnel tel qu'un élément décoratif ou un motif en relief sur un composant horloger de manière rapide et simple et qui contribue aussi à améliorer la production à grande échelle de manière automatique et économe de composants horlogers pourvus de tels éléments tridimensionnels.

Dans ce dessein, l'invention porte sur un procédé de réalisation d'un élément tridimensionnel sur un composant horloger, notamment sur un cadran comprenant les étapes suivantes :
- génération par une unité de contrôle d'au moins une instruction de pilotage d'un dispositif d'impression visant à reproduire une représentation graphique numérique de référence relative audit élément tridimensionnel, et
- construction par le dispositif d'impression d'au moins deux couches sensiblement superposées ou superposées comprenant chacune au moins une particule imprimée sur le composant horloger formant l'élément tridimensionnel.

Ainsi grâce à ces caractéristiques, le procédé de réalisation permet d'édifier un élément tridimensionnel sur un composant horloger en un nombre réduit d'opérations qui sont d'une mise en œuvre simple et rapide.

Dans d'autres modes de réalisation :
- l'étape de construction comprend pour chaque couche d'au moins une particule imprimée une sous-étape d'application d'une couche d'au moins une particule sur le composant horloger et une sous-étape de traitement de ladite couche d'au moins une particule ;
- la sous-étape d'application prévoit une exécution par l'unité de contrôle de ladite au moins une instruction de commande comprenant des données descriptives de couches constitutives de ladite représentation graphique numérique de référence devant être reproduite ;
- la sous-étape d'application prévoit le dépôt d'au moins une encre comprenant ladite au moins une particule ;
- l'encre comprend un fluide transportant ladite au moins une particule, le fluide étant choisi parmi un solvant, un polymère viscoélastique, une huile, de l'eau et/ou une solution aqueuse ;
- la sous-étape de traitement de la couche d'au moins une particule comprend une phase de fixation de ladite couche d'au moins une particule fonctionnelle sur le composant horloger ;
- la phase de fixation prévoit une exposition de la couche d'au moins une particule à un flux d'air notamment chaud et/ou à un rayonnement lumineux notamment à un rayonnement ultraviolet (UV) ou encore infrarouge ;
- ladite au moins une particule est comprise dans une encre telle qu'une encre colorée comprenant au moins une particule pigmentée ou colorée ;
- ladite au moins une particule est comprise dans une encre telle qu'une encre incolore ou transparente ou translucide comprenant au moins une particule incolore ou transparente ou translucide ;
- ladite au moins une particule est comprise dans une encre telle qu'une encre fonctionnelle comprenant au moins une particule fonctionnelle ;
- la sous-étape de traitement participe à obtenir l'élément tridimensionnel sur un composant horloger formé d'au moins deux couches comportant chacune au moins une particule imprimée sensiblement superposées ou superposées, et
- l'élément tridimensionnel réalisé présente une épaisseur supérieure ou sensiblement supérieure à 100 microns.

L'invention porte aussi sur composant horloger notamment un cadran comprenant au moins un élément tridimensionnel susceptible d'être obtenu à partir d'un tel procédé.

L'invention porte également sur une pièce d'horlogerie comportant au moins un tel composant horloger.

L'invention porte aussi sur un système de réalisation d'un élément tridimensionnel sur un composant horloger mettant en œuvre un tel procédé, le système comprenant un dispositif d'impression et une unité de contrôle, ledit dispositif d'impression étant connecté à ladite unité de contrôle.

Avantageusement, l'unité de contrôle comprend des ressources matérielles et logicielles, lesdites ressources matérielles comprenant des éléments de mémoire comportant au moins une représentation graphique tridimensionnelle de référence à réaliser sur un composant horloger et des données descriptives relatives à ladite au moins une représentation graphique tridimensionnelle de référence.

L'invention porte également sur un programme d'ordinateur comprenant des instructions de code de programme pour l'exécution des étapes de ce procédé lorsque ledit programme est exécuté par une unité de contrôle.

### Brève description des figures

D'autres caractéristiques et avantage de la présente invention apparaîtront à la lecture de plusieurs formes de réalisation données uniquement à titre d'exemples non limitatifs et faites en référence aux dessins annexés dans lesquels :
- la figure 1 est une représentation schématique relative à un système de réalisation d'un élément tridimensionnel sur un composant horloger, selon un mode de réalisation de l'invention ;
- la figure 2 est un logigramme relatif à un procédé de réalisation d'un élément tridimensionnel sur un composant horloger, selon le mode de réalisation de l'invention ;
- la figure 3 est une représentation schématique d'une pièce d'horlogerie comprenant un composant horloger pourvu d'au moins un élément tridimensionnel, selon le mode de réalisation de l'invention ;
- les figures 4, 5A, 5B représentent des vues schématiques d'un dispositif d'impression du système, selon le mode de réalisation de l'invention ;
- la figure 6A représente une vue d'un exemple de plusieurs cadrans d'une pièce d'horlogerie après une première étape de construction d'une couche d'au moins une particule imprimée, selon le mode de réalisation de l'invention ;
- la figure 6B représente une vue similaire à la figure 6A après une deuxième étape de construction d'une couche d'au moins une particule imprimée, selon le mode de réalisation de l'invention, et
- la figure 6C représente une vue similaire à la figure 6B après une troisième étape de construction d'une couche d'au moins une particule imprimée, selon le mode de réalisation de l'invention.

### Description détaillée de l'invention

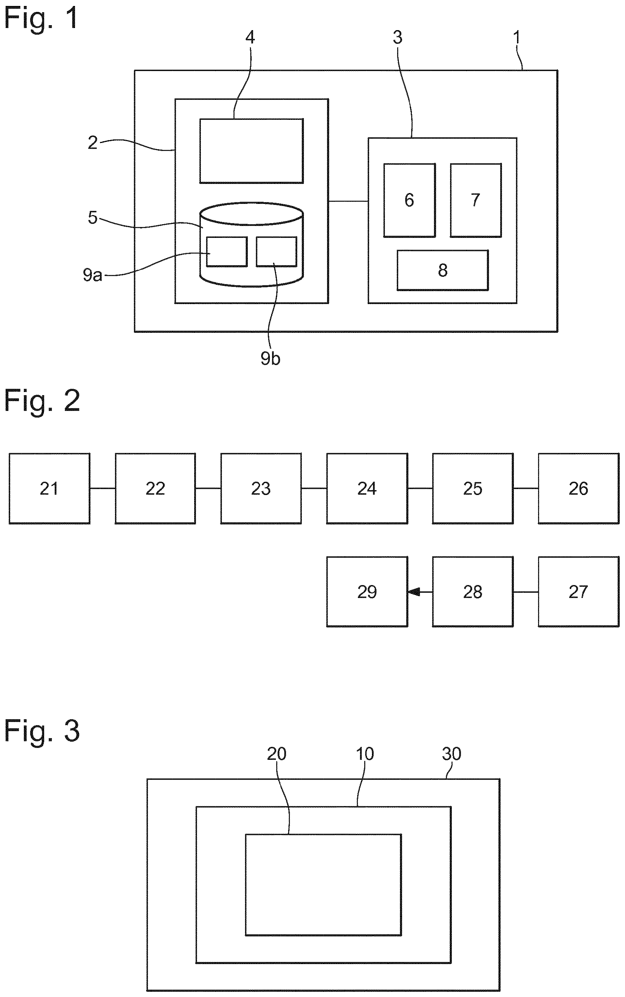

En référence à la figure 1, le système 1 de réalisation d'un élément tridimensionnel 20 sur un composant horloger 10 d'une pièce d'horlogerie 30 comprend une unité de contrôle 2 et un dispositif d'impression 3. Autrement dit, l'invention consiste ici non pas à fabriquer le composant horloger 10 mais à construire sur ce composant 10 un élément tridimensionnel 20. Le composant horloger 10 peut être par exemple un cadran. Ce composant horloger 10 peut également être un substrat destiné à former un tel composant 10. Un tel composant horloger 10 prévu pour accueillir l'élément tridimensionnel 20 peut être réaliser en une matière différente de celle de cet élément tridimensionnel 20. Ce composant horloger 10 peut être par exemple obtenu par usinage ou encore moulage. L'élément tridimensionnel 20 sur ce composant horloger 10 peut être en couleur, multicolore, monochrome, transparent ou translucide et comprendre par exemple un élément décoratif ou un motif présentant un relief tel qu'un index ou une applique susceptible par exemple de participer à l'indication d'une information telle que la date ou l'heure.

On notera que l'élément tridimensionnel 20 est formé à partir d'au moins deux couches appliquées sur le composant horloger, les couches étant sensiblement superposées ou superposées et comprenant chacune au moins une particule qui est alors ici imprimée sur ledit composant horloger 10. Cette particule autrement appelée « particule utile » ou « particule caractérisante » est celle qui vient caractériser la couche correspondante sur au moins un des aspects de cette couche par exemple sa nature, sa texture, son caractère, sa couleur, sa teinte, et/ou sa fonction, etc...

Dans ce système 1, l'unité de contrôle 2 est connectée au dispositif d'impression 3 afin notamment d'assurer le pilotage de ce dispositif 3. L'unité de contrôle 2 peut être un ordinateur ou encore un microcontrôleur en comprenant des ressources matérielles et logicielles en particulier au moins un processeur 4 coopérant avec des éléments de mémoire 5. Cette unité de contrôle 2 est apte à exécuter des instructions pour la mise en œuvre d'un programme d'ordinateur.

Dans cette unité de contrôle 2, les éléments de mémoire 5 comprennent en plus du programme d'ordinateur, des données relatives à au moins une représentation graphique numérique de référence 9a susceptible d'être reproduite sur le composant horloger 10 afin pour l'édification de l'élément tridimensionnel 20, ainsi que des données descriptives 9b relatives à ladite au moins une représentation graphique numérique de référence 9a. Cette représentation graphique numérique de référence 9a peut comprendre représentation graphique bidimensionnelle de référence ou une représentation graphique tridimensionnelle de référence. On notera que la représentation graphique numérique de référence 9a est générée par un module de conception du système 1 qui est relié à l'unité de contrôle 2 pouvant comprendre un dispositif de numérisation tridimensionnelle ou encore par un outil logiciel exécuté par l'unité de contrôle 2 permettant une modélisation 3D virtuelle à partir de photographies ou d'images, ou permettant encore de concevoir un objet numérique virtuel tridimensionnel (par exemple un logiciel de conception assistée par ordinateur plus connue sous l'acronyme CAO).

Un tel dispositif d'impression 3 comprend un organe d'impression 6, un organe de fixation 7 et un organe d'entrainement 8. L'organe d'impression 6 comprend plusieurs entités d'impression notamment des cartouches d'impression à jet d'encre chaque entité comprenant une tête d'impression et au moins un réservoir 12a à 12f. Dans le présent mode de réalisation, chaque cartouche comprend au moins une tête d'impression 12a à 12f à jet d'encre. Dans ces cartouches, l'encre comporte au moins une particule pouvant être comprise dans un fluide. Un tel fluide est prévu pour assurer le transport de cette dite au moins une particule sur le support sur lequel elle doit être déposée ici le composant horloger 10, lors de son éjection de la tête d'impression. Un tel fluide peut être tout corps susceptible d'assurer ce transport. Ce fluide peut être choisi de manière non limitative et non exhaustive parmi un solvant, un polymère viscoélastique, une huile, de l'eau et une solution aqueuse. A titre d'exemple, lorsqu'il s'agit d'un polymère viscoélastique, ce fluide est un fluide polymère viscoélastique en phase liquide non polymérisé qui est de préférence photo-polymérisable. On notera que dans une variante, ladite au moins une particule peut être déposée sur ce support sans requérir un tel fluide pour assurer son transport. Les cartouches de cet organe d'impression 6 peuvent comprendre des encres comme par exemple :
- une encre colorée comportant au moins une particule pigmentée ou colorée, ou
- une encre incolore ou transparente ou translucide, telle qu'une laque, comportant au moins une particule incolore ou transparente ou translucide, ou
- une encre fonctionnelle comportant au moins une particule fonctionnelle et qui est sélectionnée parmi le groupe constitué par une encre électroluminescente, une encre phosphorescente, encre photoluminescente, une encre conductrice, une encre semiconductrice, une encre électroactive, une encre magnétique, une encre photochrome, encre électrochrome, encre thermochrome, une encre ionochrome et une encre mécanochrome.

Dans ce contexte, une couche constituée d'au moins une particule fonctionnelle et/ou d'au moins une particule colorée ou pigmentée, et/ou d'au moins une particule incolore ou transparente ou translucide, peut présenter de manière non exhaustive et non limitative :
- une couleur blanche uniquement ;
- une couleur blanche avec un rendu mat ou brillant par la présence d'au moins une particule incolore ou transparente ou translucide ;
- une couleur noire uniquement ;
- une couleur noire avec un rendu mat ou brillant par la présence d'au moins une particule incolore ou transparente ou translucide ;
- une large gamme de couleurs grâce à la technique de la quadrichromie mettant en œuvre les couleurs fondamentales telles que le cyan, le magenta, le jaune et le noir (appelé système CMJN) permettant de reproduire cette large gamme de couleurs à partir de trois couleurs élémentaires, un bleu-vert appelé cyan, un rouge dit magenta et un jaune auxquelles on ajoute la couleur noire.

En complément, un tel dispositif d'impression 3 est par ailleurs capable de participer à la réalisation d'un élément tridimensionnel 20 sur le composant horloger 10 avec une résolution faible ou encore avec une résolution élevée pouvant être supérieure ou égale à 2400 dpi (pixels par pouce).

Dans ce dispositif d'impression 3, l'organe d'entrainement 8 est apte à provoquer le déplacement de l'organe d'impression 6 dans différentes directions relativement à un élément de support du système 1 sur lequel est susceptible d'être disposé le composant horloger 10. Cet élément de support qui est apte à faire défiler le composant horloger 10 devant les têtes d'impression 12a à 12f, peut comprendre un élément de liaison amovible de composant horloger 10 comme par exemple un élément adhésif. S'agissant de l'organe de fixation 7 il est prévu pour assurer la fixation d'une couche d'au moins une particule sur le support ici le composant horloger ou sur une première couche ou couche initiale déjà présente sur ce composant horloger 10. Cet organe de fixation 7 comprend un module susceptible d'émettre un rayonnement ultraviolet UV et/ou infrarouge et/ou un flux d'air notamment un flux d'air chaud. Ce module est apte à générer un rayonnement ou un flux d'air sur tout ou partie d'une zone de montage d'une surface du composant horloger 10 sur laquelle est susceptible d'être édifié l'élément tridimensionnel 20. On notera que lorsque les différentes encres évoquées précédemment comprennent un fluide polymère viscoélastique, le module est un module de photo-polymérisation pourvu d'une source de rayonnement ultraviolet UV et qui est donc apte à générer un rayonnement UV sur tout ou partie de la zone de montage de la surface du composant horloger 10 sur laquelle est susceptible d'être édifié l'élément tridimensionnel 20.

Un tel système 1 est apte à mettre en œuvre un procédé de réalisation de l'élément tridimensionnel 20 sur un composant horloger 10 représenté sur la figure 2.

Ce procédé comprend une étape de génération 21 d'au moins une représentation graphique numérique de référence 9a. Lors cette étape 21, cette représentation graphique numérique de référence 9a peut être réalisée à partir d'une numérisation tridimensionnelle ou encore lors de l'exécution par l'unité de contrôle 2 d'un logiciel de modélisation 3D virtuelle ou de conception d'un objet numérique virtuel tridimensionnel (par exemple un logiciel de conception assistée par ordinateur plus connue sous l'acronyme CAO). Une fois générée, cette représentation graphique numérique de référence 9a est archivée sous le format d'un fichier numérique de données dans les éléments de mémoire 5 de l'unité de contrôle 2. Autrement dit, un tel fichier comprend des données d'information relatives à la représentation graphique numérique de référence 9a.

Le procédé prévoit ensuite une étape de détermination 22 de données descriptives 9b relatives à ladite représentation graphique tridimensionnelle de référence 9a. Une telle étape 22 est mise en œuvre par l'unité de contrôle 2 et permet donc de déterminer des données descriptives 9b qui participent notamment à sélectionner le ou les types d'encres nécessaires à la réalisation de l'élément tridimensionnel 20 sur le composant horloger 10 ainsi que la direction de déplacement de l'organe d'impression 6. Lors de cette étape 22, un traitement de ce fichier et en particulier des données d'information relatives la représentation graphique numérique de référence 9a, est alors réalisé en mettant en œuvre notamment un processus de division/découpe numérique de cette représentation graphique 9a en au moins deux couches selon une :
- direction transversale qui peut être horizontale, verticale ou oblique ;
- direction longitudinale qui peut être horizontale, verticale ou oblique.

Par la suite, lors de ce traitement, l'unité de contrôle 2 détermine des éléments caractéristiques de chaque couche obtenue telles que :
- au moins une dimension de chaque couche, il peut s'agir par exemple pour chaque couche, d'une épaisseur, longueur largueur, surface, un volume, etc... ;
- des aspects visuels/esthétiques/structurels c'est-à-dire visuels et/ou esthétiques et/ou structurels de chaque couche de la représentation graphique tridimensionnelle de référence 9a tels que la couleur et/ou la texture, etc...
- des caractéristiques fonctionnelles physiques et/ou chimiques que devra présenter l'élément tridimensionnel 20 et qui sont liées par exemple à :
   - la conductivité électrique, caractère semi-conducteur ou isolant ;
   - la semi-conductivité
   - l'électroluminescence ;
   - la photoluminescence (par exemple une réaction à un rayonnement ultraviolet) ;
   - la phosphorescence,
   - « X-chromisme » (photochrome, électrochrome, thermochrome, ionochrome, mécanochrome...),
   - l'électroactivation,
   - le magnétisme,
   - etc...

Ces éléments caractéristiques de chaque couche constituent les données descriptives 9b relatives à la représentation graphique tridimensionnelle de référence 9a qui sont archivées dans les éléments de mémoire 5 de l'unité de contrôle 2.

Le procédé de réalisation de cet élément tridimensionnel 20 comprend aussi une étape d'agencement 23 du composant horloger 10 sur l'élément de support du système 1. Il comprend également une étape de sélection 24 de la représentation graphique tridimensionnelle de référence 9a qui doit être reproduite sur le composant horloger 10 afin de former l'élément tridimensionnel 20. Lors de cette étape de sélection 24, il est alors possible de choisir cette représentation graphique tridimensionnelle de référence 9a à partir d'une interface homme-machine (IHM) reliée à l'unité de contrôle 2. On notera que cette étape 24 peut indifféremment être mise en œuvre avant ou après l'étape d'agencement 23.

Ce procédé comprend en outre une étape de traitement 25 de la surface du composant horloger 10 notamment de la zone de montage de cette surface sur laquelle l'élément tridimensionnel 20 va être réalisée. Cette étape de traitement 25 peut indifféremment être mise en œuvre avant ou après l'une ou l'autre des étapes génération 21, de détermination 22, d'agencement 23 ou encore de sélection 24. Une telle étape de traitement 25 peut être réalisée en mettant en œuvre des technologies de traitement par plasma atmosphérique, par plasma basse pression, par flammage, par décharge électrique CORONA, par dépôt d'une couche organique, par bain de nettoyage, par galvanisation, par utilisation de primaire d'adhésion ou une combinaison de l'une ou l'autre ou plusieurs de ces technologies entre elles. Une telle étape 25 peut être réalisée ou pas sous vide. En complément, on notera que cette étape de traitement 25 contribue à assurer une bonne adhésion entre la surface du composant horloger 10 et l'élément tridimensionnel 20 réalisée sur le composant horloger 10 notamment entre une première couche dite couche initiale constituant cet élément tridimensionnel 20 avec cette surface qui est décrite par la suite.

Le procédé prévoit ensuite une étape de génération 26 par l'unité de contrôle 2 d'au moins une instruction de commande pour le pilotage du dispositif d'impression 3, ladite au moins une instruction visant en la reproduction de la représentation graphique numérique de référence 9a. Cette étape de génération 26 de cette dite au moins une instruction de commande est réalisée à partir des données descriptives 9b relatives aux couches constitutives de la représentation graphique numérique de référence 9a devant être reproduite. Cette dite au moins une instruction comprend des critères de pilotage du dispositif d'impression 3 et notamment de l'organe d'impression 6 et de l'organe de fixation 7. Ces critères comprennent notamment des données relatives à
- une sélection des cartouches comprenant les têtes d'impression 12a à 12f nécessaires à la reproduction de chaque couche de la représentation graphique numérique de référence 9a et ce, en fonction de l'encre qu'elles contiennent, notamment à la reproduction des aspects visuels/esthétiques/structurels et/ou des caractéristiques fonctionnelles de chacune ces couches ;
- déplacement de la tête d'impression 12a à 12f de chaque cartouche relativement à la zone de montage de la surface du composant horloger 10 pour la reproduction d'au moins une dimension et/ou des aspects visuels/esthétiques/structurels et/ou des caractéristiques fonctionnelles de chaque couche de la représentation graphique numérique de référence 9a ;
- distance et/ou positionnement de la tête d'impression 12a à 12f de chaque cartouche relativement à la zone de montage de la surface du composant horloger 10 pour la reproduction d'au moins une dimension et/ou des aspects visuels/esthétiques/structurels et/ou des caractéristiques fonctionnelles de chaque couche de la représentation graphique numérique de référence 9a ;
- durée de positionnement de la tête d'impression 12a à 12f de chaque cartouche relativement à la zone de montage d2e la surface du composant horloger 10 pour la reproduction d'au moins une dimension et/ou des aspects visuels/esthétiques/structurels et/ou des caractéristiques fonctionnelles de chaque couche de la représentation graphique tridimensionnelle de référence 9a ;
- débit d'encre éjectée des têtes d'impression 12a à 12f, notamment le nombre de gouttes éjectées pour la reproduction d'au moins une dimension et/ou des aspects visuels/esthétiques/structurels et/ou des caractéristiques fonctionnelles de chaque couche de la représentation graphique tridimensionnelle de référence 9a.

Par la suite le procédé comprend une étape de construction 27 par le dispositif d'impression 3 d'au moins deux couches sensiblement superposées ou superposées comportant chacune au moins une particule imprimée sur la surface du composant horloger 10 formant l'élément tridimensionnel 20. Une telle étape 27 peut être aussi appelé « une étape de construction 27 par jet d'au moins particules ». En effet, lors de cette étape 27, les particules sont projetées sur le composant horloger 10. Ces particules peuvent être comprises dans une même buse ou plusieurs buses différentes de la tête d'impression. On notera ainsi que nous l'avons évoqué précédemment que la particule peut être déposée sur le composant horloger 10 en étant comprise dans un fluide ou dans une variante sans requérir un tel fluide pour assurer son transport.

Ladite au moins une particule imprimée est comprise dans l'une des encres fonctionnelles, colorée et/ou incolore/transparente/translucide évoquées précédemment. On notera en effet, qu'une couche peut être formée uniquement à partir d'au moins un type de particule imprimée ou à partir de plusieurs types de particules à savoir des particules fonctionnelles, colorées et/ou incolores/transparentes/translucides imprimées.

Cette étape de construction 27 comprend pour chaque couche d'au moins une particule imprimée édifiée sur le composant horloger 10 deux sous-étapes 28, 29. La première sous-étape est une sous-étape d'application 28 d'une couche d'au moins une particule sur ce composant horloger 10 en particulier sur la zone de montage de la surface de ce composant 10. Cette application de la couche peut être réalisée de manière continue ou sélective. Ainsi que nous l'avons évoqué précédemment ladite au moins une particule peut être une particule fonctionnelle, colorée et/ou incolore/transparente/translucide. On comprend que cette couche peut comprendre plusieurs types de particules en plus de ladite au moins une particule, choisis parmi les particules fonctionnelles, colorées ou incolores/translucides/transparentes. En outre, cette sous-étape d'application 28 prévoit une exécution par l'unité de contrôle 2 de ladite au moins une instruction de commande comprenant des données descriptives de ladite représentation graphique tridimensionnelle de référence 9a devant être reproduite. L'exécution de ladite au moins une instruction permet de contrôler dans le cadre de l'application de cette couche, le dépôt d'au moins une encre comprenant ladite au moins une particule et éventuellement d'autres d'encres comprenant au moins une particule fonctionnelles, colorées ou incolores/translucides/transparentes. La deuxième sous-étape est une sous-étape de traitement 29 de ladite couche d'au moins une particule succédant directement à la sous-étape d'application 28, et qui est prévue pour finaliser l'impression de ladite au moins une particule de cette couche sur le composant horloger 10 Cette sous-étape de traitement 29 de la couche d'au moins une particule fonctionnelle comprend une phase de fixation de ladite couche d'au moins une particule sur le composant horloger 10. Cette phase de fixation prévoit une exposition de la couche d'au moins une particule à un flux d'air notamment chaud et/ou à un rayonnement lumineux notamment à un rayonnement ultraviolet (UV) ou encore infrarouge. Cette phase de fixation vise ainsi à transformer la couche d'au moins une particule qui est l'état pâteux ou liquide en une couche d'au moins une particule imprimée qui est à l'état solide, rigide, élastique, sec, réticulé et/ou infusible. On notera qu'une telle transformation à l'avantage d'être réalisée très rapidement en général en moins d'une seconde.

Dans un exemple dans lequel la particule est comprise dans une encre polymère viscoélastique c'est-à-dire une encre comprenant un fluide polymère viscoélastique apte à transporter et/ou fixer/lier cette dite au moins une particule, l'étape de construction 27 prévoit une sous-étape d'application 28 dans laquelle l'unité de contrôle 2 exécute ladite au moins une instruction de pilotage comprenant des données descriptives 9b de ladite représentation graphique tridimensionnelle de référence 9a devant être reproduite. Par la suite, le dispositif d'impression 3 applique une couche d'au moins une particule directement sur la zone de montage de la surface prévue à cet effet sur le composant horloger 10 en fonction de ladite au moins une instruction de pilotage exécutée. Cette couche comprend une encre comportant ladite au moins une particule transportée par un fluide polymère viscoélastique, cette encre est également appelée dans ce contexte encre polymère viscoélastique. Cette couche d'encre polymère viscoélastique est autrement appelée couche initiale ou première couche. Cette première couche et donc le ou les particules qui la constituent, subit ensuite une polymérisation lors de la sous-étape de traitement 29 de cette couche. En effet, cette sous-étape 29 comprend une phase de fixation de cette couche sur la zone de montage. Lors de cette phase, ladite couche est photo-polymérisée en étant exposée à un rayonnement lumineux notamment à un rayonnement ultraviolet UV émis par l'organe de fixation 7 et qui vise à la transformer en une couche d'encre polymère acrylate encore appelée couche d'encre polymère viscoélastique polymérisé. On notera que cette encre polymère viscoélastique polymérisée peut être également appelée encre polymère photo-réticulée ou encore une encre polymère photo-polymérisée. Par la suite, le dispositif d'impression 3 peut appliquer une deuxième couche d'au moins une particule fonctionnelle et/ou colorée et/ou incolore/translucide/transparente sur la première couche d'au moins un fluide polymère viscoélastique polymérisé déjà présente sur le composant horloger 10 et ce, en fonction de ladite au moins une instruction de pilotage exécutée. Cette deuxième couche peut comprendre une encre fonctionnelle et/ou une encre colorée et/ou une encre incolore/translucide/transparente comportant ladite au moins une particule correspondante transportée par un fluide polymère viscoélastique, ces encres sont également appelées dans ce contexte encre polymère viscoélastique fonctionnelle, encre polymère viscoélastique colorée et encre polymère viscoélastique incolore/translucide/transparente. Cette deuxième couche et donc le ou les particules qui la constituent, subit aussi une polymérisation lors de la sous-étape de traitement 29. Ces première et deuxième couches sont agencées sur le composant horloger 10 en étant sensiblement superposées ou superposées. En effet, la deuxième couche peut être dans une variante appliquée à la fois sur la première couche et directement sur la zone de montage de la surface du composant horloger 10. Dans ces conditions, cette polymérisation permet de fixer la première couche à la surface du composant horloger 10 et la deuxième couche à la première couche ou encore à cette première couche et aussi à la zone de montage de la surface du composant horloger 10 selon les variantes correspondantes.

On notera que la couche d'au moins une particule appliquée sur le composant horloger 10 peut présenter une épaisseur comprise entre 10 et 150 microns, et est de préférence de 100 microns.

En remarque, on entend donc par couche d'au moins une particule, une couche qui est déposée sur la zone de montage de la surface du composant horloger 10 prévue à cet effet, de manière sélective ou continue et qui est susceptible de subir une phase de fixation par une exposition à un rayonnement lumineux ou à un flux d'air. Une couche, dans le contexte de l'invention, peut avoir une épaisseur constante en tout point ou une épaisseur irrégulière qui est obtenue par le dépôt d'un nombre variable de gouttes d'au moins une encre par au moins une tête d'impression 12a à 12f à jet d'encre en fonction de la position de cette tête 12a à 12f par rapport au composant horloger 10, et cela par au moins un seul passage de cette dite au moins une tête d'impression 12a à 12f au-dessus de la zone de montage de la surface du composant horloger 10 où l'élément tridimensionnelle 20 doit être édifié. On notera que chaque goutte comprend au moins une particule.

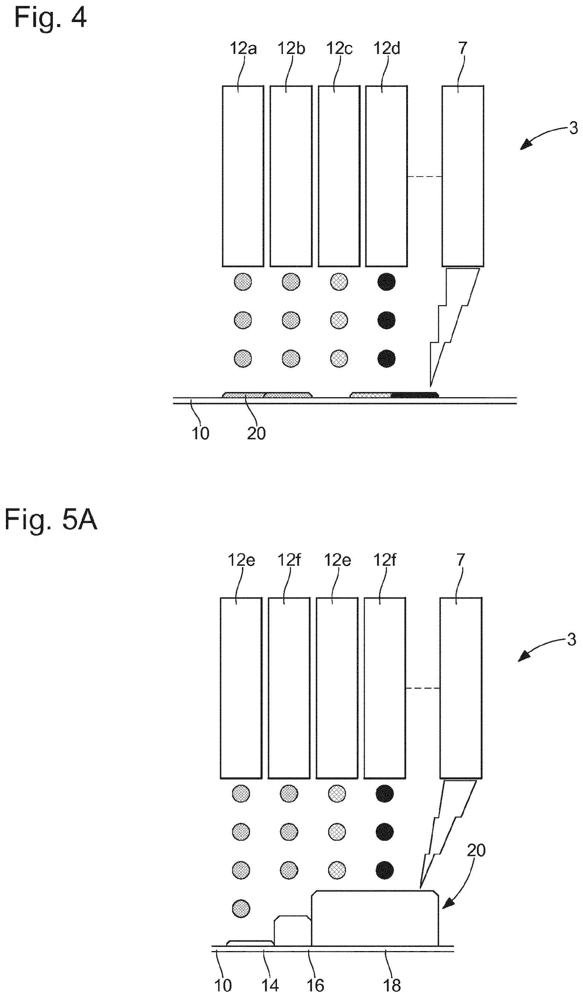

Sur la figure 4, le dispositif d'impression 3 et en particulier l'organe d'impression 6 de ce dernier comprend par exemple quatre cartouches pourvues des têtes d'impression 12a, 12b, 12c, 12d. Ces cartouches contiennent chacune une encre polymère viscoélastique ici par exemple de l'encre polymère viscoélastique colorée comprenant au moins une particule pigmentée ou une particule colorée permettant de reproduire la couleur cyan, magenta, jaune ou noire. Dans ce contexte, lors de l'étape de construction 27, l'organe d'impression 6 est alors piloté par l'unité de contrôle 2 de sorte à appliquer/déposer la première couche d'au moins une particule colorée de manière continue ou sélective sur la zone de montage de la surface du composant horloger 10. Cette couche comporte alors une ou plusieurs couleurs correspondant à la couleur ou aux couleurs de la couche correspondante de la représentation graphique tridimensionnelle de référence 9a. Des gouttes d'encres de couleurs cyan, magenta, jaune et/ou noir sont éjectées de buses des têtes d'impression 12a, 12b, 12c, 12d vers la zone de montage du composant horloger 10. La distance ou le positionnement de chaque tête d'impression 12a à 12d relativement à cette zone de montage peut être ajustée en fonction du besoin, par exemple en fonction de la précision des contours et relief des couches constituant la représentation graphique tridimensionnelle de référence 9a. Le nombre de gouttes peut varier aussi par passage ou en fonction de la résolution. La goutte déposée sur la surface du composant horloger 10 s'étale plus ou moins en fonction notamment de l'état de surface du composant horloger 10 de la pièce d'horlogerie 30 avant d'être polymérisée par un rayonnement ultraviolet UV émis par le module susceptible d'émettre un rayonnement ultraviolet UV. Par la suite, la deuxième couche d'au moins une particule est appliquée sur la première couche polymérisée avant de subir à son tour une polymérisation par l'application du rayonnement ultraviolet UV et de finaliser ainsi la reproduction de l'élément tridimensionnel 20 sur le composant horloger 10. La superposition des première et deuxième couches d'au moins un fluide polymère viscoélastique polymérisée forme une épaisseur d'au moins 20 à 200 microns, et de préférence d'au moins 100 microns afin de reproduire une impression de relief visible à l'œil nu du porteur d'une pièce d'horlogerie 30 comportant un composant horloger 10 réalisé selon le procédé de l'invention.

On notera que pour des réalisations d'éléments tridimensionnels 20 possédant une hauteur de relief plus importante, un nombre de couches d'au moins une particule compris entre trois à dix couches, de préférence quatre ou cinq couches doivent être édifié sur le composant horloger 10 de manière superposée ou sensiblement superposée. Chaque couche subit la sous-étape de traitement 29 et en particulier la phase de fixation par polymérisation de chaque couche par un rayonnement ultraviolet UV avant une superposition d'une couche additionnelle d'au moins une particule sur la couche précédente polymérisée ou imprimée.

La rapidité de l'étape de traitement 29 de chaque couche, de l'ordre de moins d'une seconde, permet de reproduire des représentations graphiques tridimensionnelles de référence 9a dans un lapse de temps très court par rapport aux procédés de l'état de la technique.

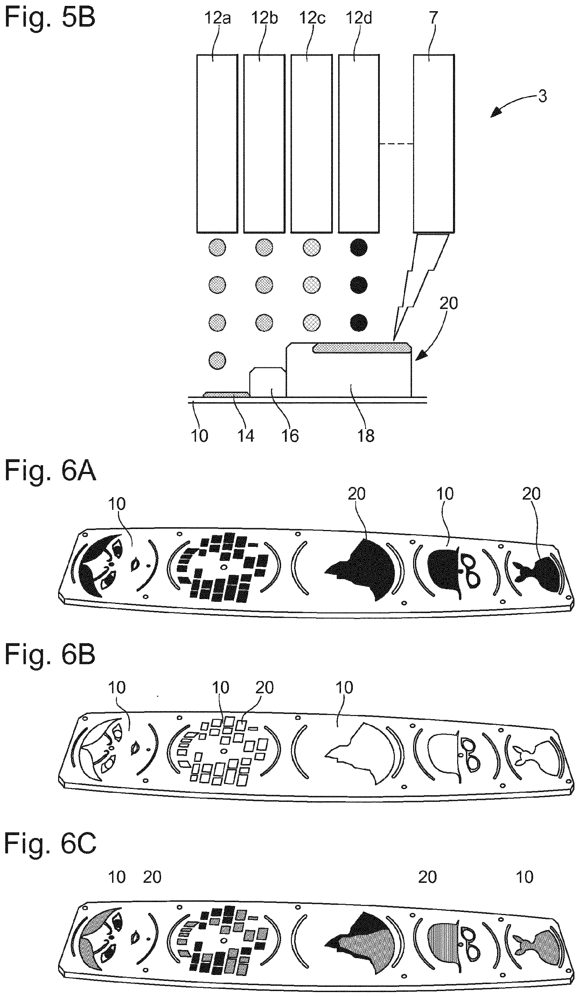

Sur les figures 5A, 5B, les dispositifs d'impression 3 et en particulier leur organe d'impression 6 comprend par exemple quatre cartouches pourvues de têtes d'impression 12a, 12b, 12c, 12d. Dans le dispositif d'impression 3 visible sur la figure 5A, l'organe d'impression 6 comprend l'organe d'impression 6 de ce dernier comprend quatre cartouches pourvues des têtes d'impression 12a, 12b, 12c, 12d. Ces cartouches contiennent chacune une encre polymère viscoélastique ici par exemple de l'encre polymère viscoélastique colorée comprenant au moins une particule pigmentée ou colorée permettant de reproduire la couleur cyan, magenta, jaune ou noire.

Dans ce contexte, lors de l'étape de construction 27, l'organe d'impression 6 est alors piloté par l'unité de contrôle 2 de sorte à former un élément tridimensionnel 20 présentant donc du relief sur le composant horloger 10 de la pièce d'horlogerie 30 et ce, par la superposition de :
- plusieurs couches d'encre polymère viscoélastique comprenant au moins une particule de couleur blanche et d'encre polymère viscoélastique incolore/transparente/translucide comprenant au moins une particule incolore/transparente/translucide à partir du dispositif d'impression 3 illustré sur la figure 5A, et
- plusieurs couches d'encre polymère viscoélastique colorée comprenant au moins une particule colorée à partir du dispositif d'impression 3 illustré sur la figure 5B.

On notera que l'utilisation de la laque permet notamment de construire l'élément tridimensionnel 20 tout comme l'encre polymère de couleur blanche.

La forme de l'élément tridimensionnel 20 est constituée de différentes parties 14, 16, 18 de hauteurs différentes. La forme de ces différentes parties est illustrée schématiquement sur les figure 5A et 5B. Dans ce contexte, le nombre de couches d'au moins une particule comprise dans ces encres polymères viscoélastiques est compris par exemple entre trois et dix couches, de préférence trois, quatre ou cinq couches peuvent être superposées pour des constructions de l'élément tridimensionnel 20 possédant une épaisseur importante. Chaque couche est polymérisée juste après l'achèvement de leur édification par un rayonnement ultraviolet UV en particulier avant la superposition d'une couche additionnelle d'au moins une particule sur cette couche maintenant polymérisée ou imprimée.

Une fois que la forme de la représentation graphique tridimensionnelle de référence 9a a été reproduite, le relief de l'élément tridimensionnel 20 et, le cas échéant, tout ou partie du composant horloger 10 en deux dimensions peuvent être alors recouverts par une couche de finalisation d'une ou plusieurs couleurs afin de reproduire la ou les couleurs de la représentation graphique numérique de référence 9a. Cette couche de finalisation comprend au moins une particule et présente une épaisseur variant en 10 et 100 microns en général en fonction du nombre d'encres et/ou de laque la constituant. Cette couche de finalisation est ensuite polymérisée par un rayonnement ultraviolet UV.

Sur les figures 6A à 6C, l'élément tridimensionnel 20 est réalisé en couleur sur un composant horloger 10 de la pièce d'horlogerie 30 et ce, par l'application de plusieurs couches d'au moins une particule colorée en noir, ladite au moins une particule étant comprise dans une encre polymère viscoélastique colorée en noir, et ensuite par une polymérisation de chacune de ces couches. On obtient ainsi un élément tridimensionnel 20 de couleur noire visible sur la figure 6A. En référence à la figure 6B, cet élément tridimensionnel 20 ainsi que les parties planes restantes du composant horloger 10 sont ensuite recouvertes d'au moins une couche d'au moins une particule de couleur blanche, ladite particule étant comprise dans une encre polymère viscoélastique de couleur blanche, de préférence de deux couches de couleur blanche, chaque couche étant ensuite polymérisée. Par la suite, des couches d'au moins une particule comprise dans une encre polymère viscoélastique colorée sont appliquées avant d'être elles aussi polymérisées, soit sur l'élément tridimensionnel 20 uniquement, soit sur les parties planes du composant horloger 10, soit sur l'élément tridimensionnel 20 et ces parties planes du composant horloger 10. On notera qu'une couche d'au moins une particule comprise dans de la laque peut ensuite être appliquée sélectivement ou sur l'intégralité du composant horloger 10 pour un rendu mat ou brillant.

L'invention porte également un programme d'ordinateur comprenant des instructions de code de programme pour l'exécution des étapes de ce procédé lorsque ledit programme est exécuté par l'unité de contrôle 2.

Bien que le procédé selon l'invention soit illustré par la réalisation d'un élément tridimensionnel 20 sur un composant horloger 10 tel qu'un cadran d'une pièce d'horlogerie 30, ce procédé est applicable à d'autres composants horlogers notamment à une lunette, à un boitier, à un fond de boitier à une masse oscillante, à un disque, à une glace ou encore à un bracelet. D'autre part, la mise en œuvre d'un tel procédé ne limite pas la réalisation d'un tel élément tridimensionnel 20 à seulement deux couches comportant chacune au moins une particule, elle peut effet prévoir la construction d'un nombre bien supérieur à deux couches pour une telle réalisation d'un élément tridimensionnel 20.

## Revendications

1. Procédé de réalisation d'un élément tridimensionnel (20) sur un composant horloger (10), notamment sur un cadran comprenant les étapes suivantes :
- traitement (25) d'une surface du composant horloger (10) notamment d'une zone de montage de cette surface sur laquelle l'élément tridimensionnel (20) est réalisé, ladite étape de traitement (25) contribue à assurer une bonne adhésion entre la surface du composant horloger (10) et l'élément tridimensionnel (20) réalisée sur le composant horloger (10) ;
- agencement (23) du composant horloger (10) sur un élément de support ;
- sélection (24) à partir d'une interface homme-machine (IHM) reliée à une unité de contrôle (2) d'une représentation graphique tridimensionnelle de référence (9a) devant être reproduite sur le composant horloger (10) afin de former ledit élément tridimensionnel (20) ;
- génération (26) par ladite unité de contrôle (2) d'au moins une instruction de pilotage d'un dispositif d'impression (3) visant à reproduire une représentation graphique numérique de référence (9a) relative audit élément tridimensionnel (20), ladite étape de génération (26) étant réalisée à partir de données descriptives (9b) relatives à des couches constitutives de la représentation graphique numérique de référence (9a) devant être reproduite, lesdites couches résultant d'un processus de division/découpe numérique de cette représentation graphique (9a) en au moins deux couches ;
- construction (27) par le dispositif d'impression (3) d'au moins deux couches superposées comprenant chacune au moins une particule utile imprimée sur le composant horloger (10) formant l'élément tridimensionnel (20).

2. Procédé selon la revendication précédente, **caractérisé en ce que** l'étape de construction (27) comprend pour chaque couche comportant ladite au moins une particule imprimée une sous-étape d'application (28) de ladite couche comprenant ladite au moins une particule sur le composant horloger (10) et une sous-étape de traitement (29) de ladite couche comprenant ladite au moins une particule.

3. Procédé selon la revendication précédente, **caractérisé en ce que** la sous-étape d'application (28) prévoit une exécution par l'unité de contrôle (2) de ladite au moins une instruction de commande comprenant des données descriptives (9b) de couches constitutives de ladite représentation graphique numérique de référence (9a) devant être reproduite.

4. Procédé selon l'une des revendications 2 et 3 **caractérisé en ce que** la sous-étape d'application (28) prévoit le dépôt d'au moins une encre comprenant ladite au moins une particule.

5. Procédé selon la revendication précédente, **caractérisé en ce que** ladite encre comprend un fluide transportant ladite au moins une particule, le fluide étant choisi parmi un solvant, un polymère viscoélastique, une huile, de l'eau et/ou une solution aqueuse.

6. Procédé selon l'une quelconque des revendications 1 à 5, **caractérisé en ce que** la sous-étape de traitement (29) de la couche comprenant ladite au moins une particule comprend une phase de fixation de ladite couche sur le composant horloger (10).

7. Procédé selon la revendication précédente, **caractérisé en ce que** la phase de fixation prévoit une exposition de la couche d'au moins une particule à un flux d'air notamment chaud et/ou à un rayonnement lumineux notamment à un rayonnement ultraviolet (UV) ou encore infrarouge.

8. Procédé selon l'une quelconque des revendications 1 à 7, **caractérisé en ce que** ladite au moins une particule est comprise dans une encre telle que :
- une encre colorée comprenant au moins une particule pigmentée ou colorée, ou
- une encre incolore ou transparente ou translucide comprenant au moins une particule incolore ou transparente ou translucide, ou
- une encre fonctionnelle comprenant au moins une particule fonctionnelle.

9. Procédé selon l'une quelconque des revendications 1 à 8, **caractérisé en ce que** la sous-étape de traitement (29) participe à obtenir l'élément tridimensionnel (20) sur un composant horloger (10) formé d'au moins deux couches comportant chacune ladite au moins une particule imprimée superposées.

10. Procédé selon l'une quelconque des revendications 1 à 9, **caractérisé en ce que** l'élément tridimensionnel (20) réalisé présente une épaisseur supérieure ou sensiblement supérieure à 100 microns.

11. Procédé selon l'une quelconque des revendications précédentes, **caractérisé en ce que** l'étape de construction (27) est une étape de construction par jet de particules.

12. Procédé selon l'une quelconque des revendications précédentes, **caractérisé en ce que** ladite particule utile caractérise la couche correspondante sur au moins un des aspects de cette couche tels que sa nature, sa texture, son caractère, sa couleur, sa teinte, et/ou sa fonction.

13. Procédé selon l'une quelconque des revendications précédentes, **caractérisé en ce que** ladite particule utile est une particule pigmentée ou colorée, une particule incolore ou transparente ou translucide ou encore une particule fonctionnelle.

14. Système de réalisation d'un élément tridimensionnel (20) ) sur un composant horloger (10) mettant en œuvre le procédé selon l'une quelconque des revendications 1 à 13, le système (1) comprenant un dispositif d'impression (3) et une unité de contrôle (2), ledit dispositif d'impression (3) étant connecté à ladite unité de contrôle (2).

15. Système (1) selon la revendication précédente, **caractérisé en ce que** l'unité de contrôle (2) comprend des ressources matérielles et logicielles, lesdites ressources matérielles comprenant des éléments de mémoire (5) comportant au moins une représentation graphique tridimensionnelle de référence (9a) à réaliser sur un composant horloger (10) et des données descriptives (9b) relatives à ladite au moins une représentation graphique tridimensionnelle de référence (9a).

## Patentansprüche

1. Verfahren zur Herstellung eines dreidimensionalen Elements (20) auf einer Uhrmacherkomponente (10), insbesondere auf einem Zifferblatt, umfassend die folgenden Schritte:
- Behandlung (25) einer Oberfläche der Uhrmacherkomponente (10), insbesondere eines Montagebereichs dieser Oberfläche, auf dem das dreidimensionale Element (20) hergestellt wird, wobei dieser Behandlungsschritt (25) dazu beiträgt, eine gute Haftung zwischen der Oberfläche der Uhrmacherkomponente (10) und dem auf der Uhrmacherkomponente (10) hergestellten dreidimensionalen Element (20) sicherzustellen;
- Anordnen (23) der Uhrmacherkomponente (10) auf einem Trägerelement;
- Auswählen (24) mittels einer Mensch-Maschine-Schnittstelle (IHM), die mit einer Steuereinheit (2) verbunden ist, einer dreidimensionalen grafischen Referenzdarstellung (9a), die auf der Uhrmacherkomponente (10) reproduziert werden soll, um das genannte dreidimensionale Element (20) zu bilden;
- Erzeugen (26) durch die genannte Steuereinheit (2) mindestens einer Steueranweisung zur Ansteuerung einer Druckvorrichtung (3), die auf die Reproduktion einer digitalen grafischen Referenzdarstellung (9a) in Bezug auf das genannte dreidimensionale Element (20) abzielt, wobei dieser Erzeugungsschritt (26) auf der Grundlage beschreibender Daten (9b) bezüglich der Schichten erfolgt, aus denen die zu reproduzierende digitale grafische Referenzdarstellung (9a) aufgebaut ist, wobei die genannten Schichten aus einem Verfahren zur digitalen Unterteilung/Zerlegung dieser grafischen Darstellung (9a) in mindestens zwei Schichten resultieren;
- Aufbauen (27) durch die Druckvorrichtung (3) von mindestens zwei übereinanderliegenden Schichten, die jeweils mindestens ein auf die Uhrmacherkomponente (10) gedrucktes Nutzpartikel umfassen und das dreidimensionale Element (20) bilden.

2. Verfahren nach dem vorhergehenden Anspruch, **dadurch gekennzeichnet, dass** der Aufbauschritt (27) für jede Schicht, die das genannte mindestens eine gedruckte Partikel umfasst, einen Unterschritt des Aufbringens (28) der genannten, das mindestens eine Partikel umfassenden Schicht auf die Uhrmacherkomponente (10) und einen Unterschritt des Behandelns (29) der genannten, das mindestens eine Partikel umfassenden Schicht umfasst.

3. Verfahren nach dem vorhergehenden Anspruch, **dadurch gekennzeichnet, dass** der Unterschritt des Aufbringens (28) die Ausführung der genannten mindestens einen Steueranweisung durch die Steuereinheit (2) vorsieht, wobei die Steueranweisung beschreibende Daten (9b) der Schichten umfasst, aus denen die genannte zu reproduzierende digitale grafische Referenzdarstellung (9a) aufgebaut ist.

4. Verfahren nach Anspruch 2 oder 3, **dadurch gekennzeichnet, dass** der Unterschritt des Aufbringens (28) das Aufbringen mindestens einer Tinte vorsieht, die das genannte mindestens eine Partikel umfasst.

5. Verfahren nach dem vorhergehenden Anspruch, **dadurch gekennzeichnet, dass** die genannte Tinte ein Fluid umfasst, das das genannte mindestens eine Partikel transportiert, wobei das Fluid aus einem Lösungsmittel, einem viskoelastischen Polymer, einem Öl, Wasser und/oder einer wässrigen Lösung ausgewählt ist.

6. Verfahren nach einem der Ansprüche 1 bis 5, **dadurch gekennzeichnet, dass** der Unterschritt des Behandelns (29) der das genannte mindestens eine Partikel umfassenden Schicht eine Phase des Fixierens der genannten Schicht auf der Uhrmacherkomponente (10) umfasst.

7. Verfahren nach dem vorhergehenden Anspruch, **dadurch gekennzeichnet, dass** die Fixierungsphase ein Aussetzen der das mindestens eine Partikel umfassenden Schicht gegenüber einem insbesondere warmen Luftstrom und/oder einer Lichtstrahlung, insbesondere einer ultravioletten (UV) oder infraroten Strahlung, vorsieht.

8. Verfahren nach einem der Ansprüche 1 bis 7, **dadurch gekennzeichnet, dass** das genannte mindestens eine Partikel in einer Tinte enthalten ist, wie etwa:
- eine farbige Tinte, die mindestens ein pigmentiertes oder farbiges Partikel umfasst, oder
- eine farblose, transparente oder transluzente Tinte, die mindestens ein farbloses, transparentes oder transluzentes Partikel umfasst, oder
- eine funktionelle Tinte, die mindestens ein funktionelles Partikel umfasst.

9. Verfahren nach einem der Ansprüche 1 bis 8, **dadurch gekennzeichnet, dass** der Unterschritt des Behandelns (29) dazu beiträgt, auf einer Uhrmacherkomponente (10) das dreidimensionale Element (20) zu erhalten, das aus mindestens zwei übereinanderliegenden Schichten gebildet ist, die jeweils das genannte mindestens eine gedruckte Partikel umfassen.

10. Verfahren nach einem der Ansprüche 1 bis 9, **dadurch gekennzeichnet, dass** das hergestellte dreidimensionale Element (20) eine Dicke von mehr als oder im Wesentlichen mehr als 100 Mikrometern aufweist.

11. Verfahren nach einem der vorhergehenden Ansprüche, **dadurch gekennzeichnet, dass** der Aufbauschritt (27) ein Aufbauschritt mittels Partikelstrahl ist.

12. Verfahren nach einem der vorhergehenden Ansprüche, **dadurch gekennzeichnet, dass** das genannte Nutzpartikel die entsprechende Schicht hinsichtlich mindestens eines Aspekts dieser Schicht, wie ihrer Art, ihrer Textur, ihres Charakters, ihrer Farbe, ihres Farbtons und/oder ihrer Funktion, charakterisiert.

13. Verfahren nach einem der vorhergehenden Ansprüche, **dadurch gekennzeichnet, dass** das genannte Nutzpartikel ein pigmentiertes oder farbiges Partikel, ein farbloses, transparentes oder transluzentes Partikel oder ein funktionelles Partikel ist.

14. System zur Herstellung eines dreidimensionalen Elements (20) auf einer Uhrmacherkomponente (10) zur Durchführung des Verfahrens nach einem der Ansprüche 1 bis 13, wobei das System (1) eine Druckvorrichtung (3) und eine Steuereinheit (2) umfasst und die genannte Druckvorrichtung (3) mit der genannten Steuereinheit (2) verbunden ist.

15. System (1) nach dem vorhergehenden Anspruch, **dadurch gekennzeichnet, dass** die Steuereinheit (2) Hardware- und Softwareressourcen umfasst, wobei die Hardware-Ressourcen Speicherelemente (5) umfassen, die mindestens eine auf einer Uhrmacherkomponente (10) herzustellende dreidimensionale grafische Referenzdarstellung (9a) und beschreibende Daten (9b) zu der genannten mindestens einen dreidimensionalen grafischen Referenzdarstellung (9a) enthalten.

## Claims

1. Method for making a three-dimensional element (20) on a horological component (10), in particular on a dial, comprising the following steps:
- treatment (25) of a surface of the horological component (10), in particular an assembly zone on this surface on which the three-dimensional element (20) is made; said treatment step (25) contributes to ensuring good adhesion between the surface of the horological component (10) and the three-dimensional element (20) made on the horological component (10);
- arrangement (23) of the horological component (10) on a supporting element;
- selection (24), from a human-machine interface (HMI) connected to a control unit (2), of a reference three-dimensional graphical representation (9a) to be reproduced on the horological component (10) to form said three-dimensional element (20);
- generation (26), by said control unit (2), of at least one command for controlling a printing device (3) with a view to reproducing a reference digital graphical representation (9a) relating to said three-dimensional element (20), said generation step (26) being carried out based on descriptive data (9b) relating to the constituent layers of the reference digital graphical representation (9a) to be reproduced, said layers resulting from a process of digitally dividing/cutting this graphical representation (9a) into at least two layers;
- design (27), by the printing device (3), of at least two overlapping layers each comprising at least one useful particle printed on the horological component (10) forming the three-dimensional element (20).

2. Method according to the preceding claim, **characterised in that** the design step (27) comprises, for each layer comprising said at least one printed particle, a substep of applying (28) said layer comprising said at least one particle to the horological component (10) and a substep of treating (29) said layer comprising said at least one particle.

3. Method according to the preceding claim, **characterised in that** the application substep (28) provides for the execution, by the control unit (2) of said at least one control instruction comprising data (9b) describing the constituent layers of said reference digital graphical representation (9a) to be reproduced.

4. Method according to any of claims 2 and 3, **characterised in that** the application substep (28) provides for the deposition of at least one ink comprising said at least one particle.

5. Method according to the preceding claim, **characterised in that** said ink comprises a fluid carrying said at least one particle, the fluid being chosen among a solvent, a viscoelastic polymer, an oil, water and/or an aqueous solution.

6. Method according to any of claims 1 to 5, **characterised in that** the substep (29) of treating the layer comprising said at least one particle comprises a phase of securing said layer to the horological component (10).

7. Method according to any of the preceding claims, **characterised in that** the securing step provides for exposure of the layer comprising at least one particle to a flow of air, in particular hot air, and/or to light radiation, in particular ultraviolet (UV) or infrared radiation.

8. Method according to any of claims 1 to 7, **characterised in that** said at least one particle is comprised in an ink such as:
- a coloured ink comprising at least one pigmented or coloured particle, or
- a colourless, transparent or translucent ink comprising at least one colourless, transparent or translucent particle, or
- a functional ink comprising at least one functional particle.

9. Method according to any of claims 1 to 8, **characterised in that** the treatment substep (29) contributes to obtaining the three-dimensional element (20) on a horological component (10) formed of at least two overlapping layers each comprising said at least one printed particle.

10. Method according to any of claims 1 to 9, **characterised in that** the three-dimensional element (20) made has a thickness greater than, or substantially greater than, 100 microns.

11. Method according to any of the preceding claims, **characterised in that** the design step (27) is a particle jet design step.

12. Method according to any of the preceding claims, **characterised in that** said useful particle characterises the corresponding layer in respect of at least one of the following aspects of that layer: its nature, its texture, its character, its colour, its shade, and/or its function.

13. Method according to any of the preceding claims, **characterised in that** said useful particle is a pigmented or coloured particle, a colourless, transparent or translucent particle, or even a functional particle.

14. System for making a three-dimensional element (20) on a horological component (10) using the method according to any of claims 1 to 13, the system (1) comprising a printing device (3) and a control unit (2), said printing device (3) being connected to said control unit (2).

15. System (1) according to the preceding claim, **characterised in that** the control unit (2) comprises hardware and software resources, said hardware resources comprising memory elements (5) comprising at least one reference three-dimensional graphical representation (9a) to be made on a horological component (10) and descriptive data (9b) relating to said at least one reference three-dimensional graphical representation (9a).
